# EUROPEAN PATENT APPLICATION

(11) **EP 1 229 750 A1**
(43) Date of publication of application: **07.08.2002**
(21) Application number: 01306910.9
(22) Date of filing: 14.08.2001
(51) Int. Cl.: H04Q 7/38

(54) **Method and apparatus for transmitting multimedia messages to a wireless phone without ringing**

(30) Priority: 02.02.2001 US 777194
(71) Applicant: LUCENT TECHNOLOGIES INC., Murray Hill, New Jersey 07974-0636 (US)
(72) Inventor: Martin, Ronald Bruce, Carol Stream, Illinois 60188 (US); Wilson, Randall Joe, Naperville, Illinois 60540-6312 (US)
(74) Representative: Buckley, Christopher Simon Thirsk

(57) **Abstract**

The present invention provides a method and system for direct access to the multimedia mailbox associated with a wireless unit. The wireless unit subscribes to the direct multimedia mail service. A calling unit, such as a wireline phone, wireless phone, or mobile phone, sends a call requesting that a direct multimedia mail message be sent to the subscriber to the direct multimedia mail service. The calling unit will be directed directly to the multimedia mailbox of the subscriber, without ringing or alerting the caller wireless unit.

## Description

### Field of the Invention

The present invention relates generally to communication systems, and more particularly to a method and apparatus for performing multimedia mail message service in a wireless communication system.

### Background of the Invention

Cellular communication systems allow phone users to dial wireless phones that subscribe to the cellular communication system. If the cellular phone is available, meaning that it is currently activated and not associated with another phone call or subscribes to call waiting service, the wireless phone alerts the user of the wireless phone of the incoming call. This alert is typically in the form of an audible signal, such as ringing or the like, or through other sensory means, such as through vibration of the wireless phone.

If the user of the wireless phone fails to answer the incoming call, such as if the wireless phone is turned off, out of range, or the user decides not to take the call, the caller can be placed in the voice mailbox of the intended wireless phone. The caller can then leave a message for the user of the wireless phone in the voice mailbox.

There are circumstances in which the caller may want to leave a voice mail message but may not want to talk to or alert the user of the wireless phone. For example, the caller may know that the wireless phone user is in a meeting and does not want to be disturbed. Another example occurs when a caller wants to leave a detailed message for the user, but would prefer to have it stored in voice mail so that the user could refer back to it at a later time, and re-listen to portions of it if the user desires.

There is currently no method of providing a cellular service that allows a caller to leave a voice mail message directly in the voice mailbox of a wireless phone without first ringing or alerting the wireless phone. Therefore, a need exists for a method and apparatus for allowing a calling party to directly leave a message in the voice mailbox or multimedia mailbox of a wireless phone without ringing the wireless phone.

### Summary of the Invention

It is an object of the present invention to provide a method and apparatus for allowing a calling party to directly leave a multimedia message in the multimedia mailbox associated with a wireless phone without ringing the wireless phone. A multimedia mailbox is similar to a voice mailbox but is capable of storing multiple types of messages. The multimedia message stored by the multimedia mailbox can be a voicemail message, a video message, or any other multimedia message that can be stored in the multimedia mailbox. The bandwidth of a multimedia mailbox is generally greater than that of a voice mailbox.

The wireless phone user signs up for direct multimedia mail service, which allows other users to direct messages to the multimedia mailbox of the wireless phone without ringing the wireless phone. In the preferred embodiment, a calling party, which can be another wireless phone, a landline phone, or any monomedia or multimedia device, makes a call request requesting direct access to the multimedia mailbox of the called wireless phone. This is preferably done by entering a predetermined code prior to dialing the directory number of the wireless phone. For example, the calling party could dial *90, followed by the directory number of the called wireless phone. The *90 code is an indication of the desire not to ring the called wireless phone, but rather to be placed directly into the multimedia mailbox associated with the called wireless phone.

Upon receiving the request to be placed directly into the multimedia mailbox associated with the called wireless phone, the control entity responsible for call processing, such as a Mobile Switching Center (MSC) in a Second Generation cellular system or Call Session Control Function (CSCF) in a Third Generation cellular system, checks to determine if the called wireless phone has subscribed to the direct multimedia mail service. If the called wireless phone has subscribed to the direct multimedia mail service, the calling party is placed directly into the multimedia mailbox associated with the called wireless phone without ringing or first alerting the called wireless phone.

If the called wireless phone has not subscribed to the direct multimedia mail service, the direct multimedia mail request is preferably ignored and the call is placed to the called wireless phone as if the direct multimedia mail request had not been placed. Alternately, a message could be played to the calling party stating that the user has not subscribed to the direct multimedia mail service. At this point, the call could be ended or a choice could be given to the user as to whether the caller would like to terminate the call or proceed with a regular call to the called party.

In an alternate embodiment of the present invention, a user can subscribe to the direct multimedia mail service and activate direct multimedia mail when desired. In this embodiment, upon activating the direct multimedia mail service, any incoming calls intended for the wireless phone are preferably automatically routed directly to the multimedia mail box associated with the wireless phone without ringing the wireless phone. Alternately, the calling party can be given an option of whether they would like to go to the multimedia mail box of the called party or terminate the call.

Thus, the present invention provides an improved method and apparatus for performing multimedia mail services in a wireless communication system.

### Brief Description of the Drawings

FIG. 1 depicts a Second Generation (2G) wireless system in accordance with the present invention.

FIG. 2 depicts a ladder diagram of a call flow in a 2G system in accordance with the preferred embodiment of the present invention.

FIG. 3 depicts a Third Generation (3G) wireless system in accordance with the present invention.

FIG. 4 depicts a ladder diagram of a call flow in a 3G system in accordance with the preferred embodiment of the present invention.

FIG. 5 depicts a flowchart of an alternate embodiment of the present invention wherein the called party subscribes for direct multimedia mail service and any calls routed to the called party are automatically routed to the multimedia mailbox associated with the called party without ringing the called party.

### Description of the Preferred Embodiment(s)

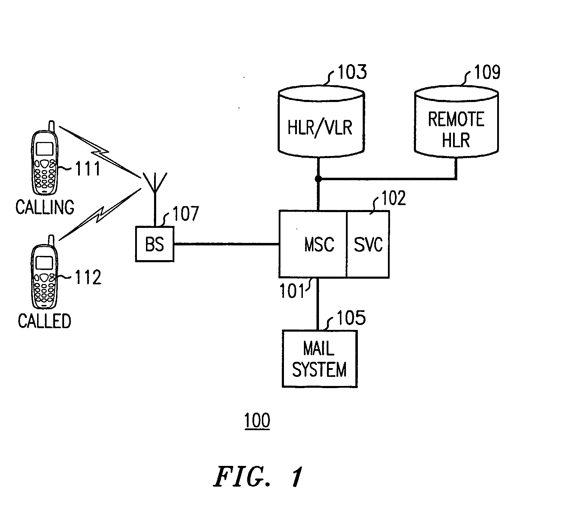

FIG. 1 depicts a Second Generation (2G) wireless system 100 in accordance with the present invention. System 100 is preferably a digital cellular communication system. Examples of 2G communication systems include Global System for Mobile Communications (GSM), Personal Communications Service (PCS), Code Division Multiple Access (CDMA), Time Division Multiple Access (TDMA), and Advanced Mobile Phone Service (AMPS).

Wireless system 100 includes a call processing control entity (Mobile Switching Center (MSC) 101), a subscriber database (Home Location Register/Visitor Location Register (HLR/VLR) 103), a multimedia mail system 105, and a base station (BS) 107. Wireless system 100 can also include a remote HLR 109. It should be understood that wireless system 100 typically includes a plurality of base stations, but only one, base station 107, is depicted for clarity. Base station 107 communicates with wireless units over well-established RF protocols. Although call processing control entity 101 is depicted as a single element (MSC 101) in FIG. 1, it should be understood that the functionality performed by call processing control entity can be distributed among various system elements within communication system 100.

MSC 101 provides digital connection and control for the call. MSC 101 includes Service Circuit (SVC) 102, which provides an interface to the user for playing a message to the caller, stating the options available to the caller, receiving the caller's choice, and forwarding the caller's choice to MSC 101. MSC 101 controls base station 107. MSC 101 is preferably coupled to a Public Switched Telephone Network (PSTN), which provides public telephone switching service to wireline telephones.

FIG. 1 also depicts two wireless units 111 and 112. Wireless system 100 can support a plurality of wireless units, but only two wireless units are depicted for clarity. Wireless units 111 and 112 are preferably cellular phones that are capable of communicating via the predefined RF protocol with base station 107. In the embodiment depicted in FIG. 1, the calling party is wireless unit 111, and the called party is wireless unit 112. The calling party can be a wireless unit, a landline telephone, or any other communication device.

HLR/VLR 103 is a database that stores the home location and the current location of wireless units within communication system 100. HLR/VLR 103 also stores a user profile, which includes the services to which a mobile unit subscribes. One such service stored in HLR/VLR 103 is the direct multimedia mail service of the present invention. Typically an HLR stores subscriber information. A VLR stores information pertaining to wireless devices that are currently located at a site to which the VLR is associated.

Multimedia mail system 105 is a multimedia mail system that performs typical multimedia mail functions within communication system 100. These functions include storing messages for users who subscribe to the multimedia mail service, playing outgoing messages for each user in the system when a multimedia mail message is incoming, and various administrative issues related to the receiving, storing, replaying, and deleting of multimedia mail messages. In the preferred embodiment of the present invention, multimedia mail system 105 is a voice mail system.

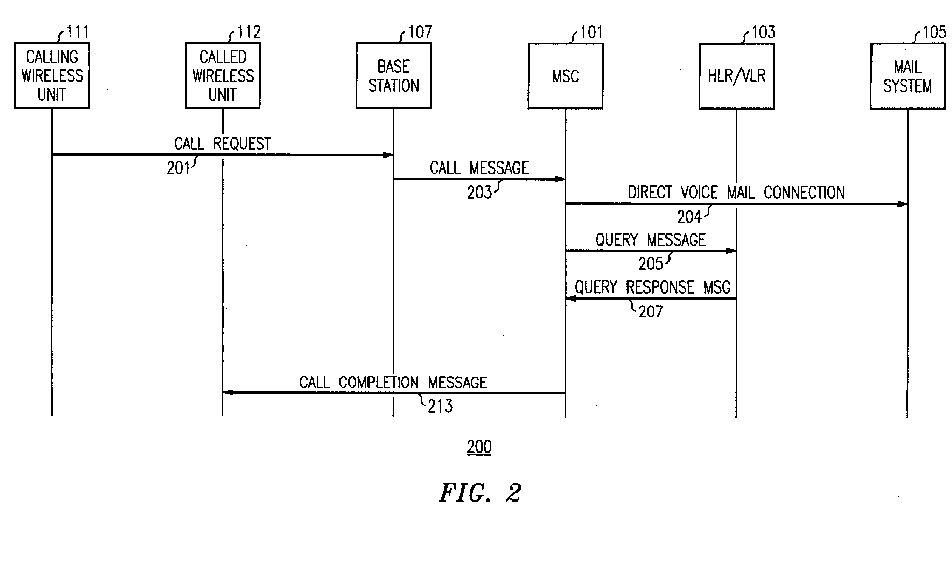

FIG. 2 depicts a ladder diagram 200 of a call flow in 2G system 100 in accordance with the preferred embodiment of the present invention. A calling unit, such as wireless unit 111, sends a call request 201 to base station 107. In the preferred embodiment, call request 201 includes a predefined code, such as *90, and the directory number of the called wireless phone. Call request 201 is a request for a direct multimedia mail message, which is a message that is delivered directly to the multimedia mailbox of the called phone without ringing the called phone. The term ringing refers to alerting the wireless phone that a call is incoming. The alerting can be via an audible means, a visual indicator, a vibrating mechanism, or any other means of indicating to the user of the wireless phone that a call is incoming.

Base station 107 forwards a call message 203 to MSC 101. Call message 203 includes an indication that this is a request for a direct multimedia mail message and the directory number of the called wireless phone. Call message 203 preferably includes the predefined code, such as *90 followed by the directory number of the called wireless unit.

MSC 101 checks a subscriber database to determine whether called wireless unit 112 has subscribed to direct multimedia mail service. If called wireless unit 112 has subscribed to the direct multimedia mail service, direct multimedia mail connection 204 is sent from MSC 101 to multimedia mail system 105. A bearer path is established between calling wireless unit 111 and multimedia mail system 105.

However, if called wireless unit 112 has not subscribed to the direct multimedia mail service, MSC 101 needs to locate called wireless unit 112 by obtaining information relating to the location of called wireless unit 112. This information is obtained by MSC 101 sending a query message 205 to HLR/VLR 103. Query message 205 preferably includes the directory number of the called wireless unit.

HLR/VLR 103 accesses its memory to determine the current location of the called wireless unit. HLR/VLR 103 responds with a query response message 207 back to MSC 101. Query response message 207 includes the last-known location of called wireless unit 112. MSC 101 then locates called wireless unit 112 using the location information obtained from HLR/VLR 103. This is accomplished via a well-known paging process. If necessary, the call is routed to another MSC. Once called wireless unit 112 is located, the base station to which it is currently active is assigned to serve the call.

Upon locating called wireless unit 312, a message is played by SVC 102 to calling wireless phone 111 stating that the intended party does not subscribe to the direct multimedia mail service. At this point, the call could be ended or a choice could be given by SVC 102 to calling wireless unit 111 as to whether the caller would like to terminate the call or proceed with a regular call to called wireless unit 112. If calling wireless unit 111 decides to proceed with the regular call, MSC 101 will not send direct multimedia mail connection 211, but will instead send call completion message 213 to called wireless unit 112. The call will then be processed in the typical manner.

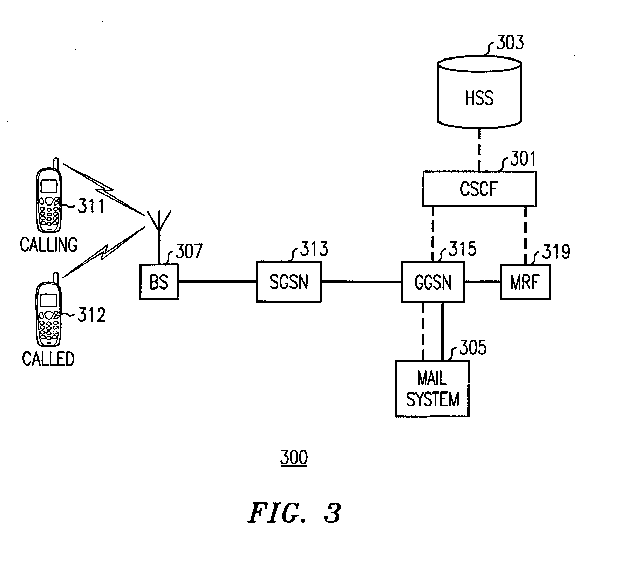

FIG. 3 depicts a Third Generation (3G) wireless system 300 in accordance with the present invention. Wireless system 300 is a digital cellular system. 3G wireless systems include multiple air interface standards, including cdma2000, Wideband CDMA (W-CDMA), and UWC-136, a Wideband TDMA technology.

3G wireless system 300 includes a call processing control entity (Call Session Control Function (CSCF) 301), a subscriber database (Home Subscriber Server (HSS) 303), a multimedia mail system 305, a Multimedia Resource Function (MRF) 319, a base station (BS) 307, a Serving GPRS Support Node (SGSN) 313, and a Gateway GPRS Support Node (GGSN) 315. It should be understood that wireless system 300 typically includes a plurality of base stations, but only one, base station 307, is depicted for clarity.

FIG. 3 also depicts two wireless units 311 and 312. Wireless system 100 can support a plurality of wireless units, but only two wireless units are depicted for clarity. In the embodiment depicted in FIG. 3, the calling party is wireless unit 311, and the called party is wireless unit 312. The calling party can be a wireless unit, a landline telephone, or any other communication device.

CSCF 301 is the call processing control entity in system 300. CSCF 301 provides bearer connection control for the call.

HSS 303 is the subscriber database of communication system 300. HSS 303 is a database that stores the home location and the current location of wireless units within communication system 300. HSS 303 also stores a user profile, which includes the services to which a mobile unit subscribes. One such service stored in HSS 303 is the direct multimedia mail service of the present invention.

MRF 319 is coupled to CSCF 301 via control and to GGSN 315 via bearer. MRF 319 provides an interface to the user for playing a message to the caller, stating the options available to the caller, receiving the caller's choice via an interaction with the calling party, and forwarding the caller's choice to CSCF 301.

Multimedia mail system 305 is a multimedia mail system that performs typical multimedia mail functions within communication system 300. Multimedia mail system 305 is substantially similar to multimedia mail system 105 described with regard to FIG. 1. Multimedia mail system 305 is preferably a 3G mail system in which voice is one of the bearer types that can be supported.

Serving GPRS Support Node (SGSN) 313 is coupled to base station 107. SGSN 313 is primarily responsible for mobility management. SGSN 313 also wireless stations in the local area for the transmission and receipt of packets. SGSN 313 also locates and identifies the status of wireless stations and gathers crucial call information, an essential aspect of billing. SGSN 313 also provides the functions of ciphering, compression and other services.

Gateway GPRS Support Node (GGSN) 315. GGSN 315 is coupled to the PSTN via a Media Gateway. GGSN 315 provides packet routing and transfers, assisting in mobility management in conjunction with SGSN 313, quality of service functionality, authentication, and system management functionality.

The general call flow is as follows. A direct voice mail request can either be initiated by calling wireless unit 311 via an access code, or by the subscription and activation of the direct multimedia mail service by called wireless unit 312. The call request is sent to base station 307, which forwards the request to SGSN 313. SGSN 313 sends a control message to GGSN 315, which forwards the control message to CSCF 301.

CSCF 301 checks HSS 303 to determined if called wireless unit 312 has subscribed to the direct multimedia mail service and to determine if the service has been activated. If the service is active, CSCF 301 sends a control message to GGSN 315 to set up a bearer path to MRF 319. CSCF 301 also sends a control message to MRF 319, which will cause it to play an announcement to calling wireless unit 311. Such an announcement may be one to determine if calling wireless unit 311 really intended to make a direct multimedia mail connection, or in the embodiment in which called wireless unit 312 has activated direct multimedia mail service, whether calling wireless unit 311 would like to be routed directly to the multimedia mail associated with called wireless unit 312 without ringing called wireless unit 312.

If calling wireless unit 311 answers affirmatively, MRF 319 sends a control message to CSCF 301 to tell CSCF 301 to route this call request to multimedia mail system 305. CSCF 301 sends a control message to GGSN 315, which sends a control message to multimedia mail system 305.

A bearer path is then established between calling wireless unit 311 and multimedia mail system 305 without ringing called wireless unit 312. Calling wireless unit 311 is then connected to the multimedia mailbox associated with called wireless unit 312 in multimedia mail system 305. Calling wireless unit 311 can then perform typical multimedia mail functionality with mail system 305.

It should be understood that the calling party can be a wireless phone, a wireline phone accessing communication system 300 via the PSTN, or any other communication device that is capable of communicating with communication system 300.

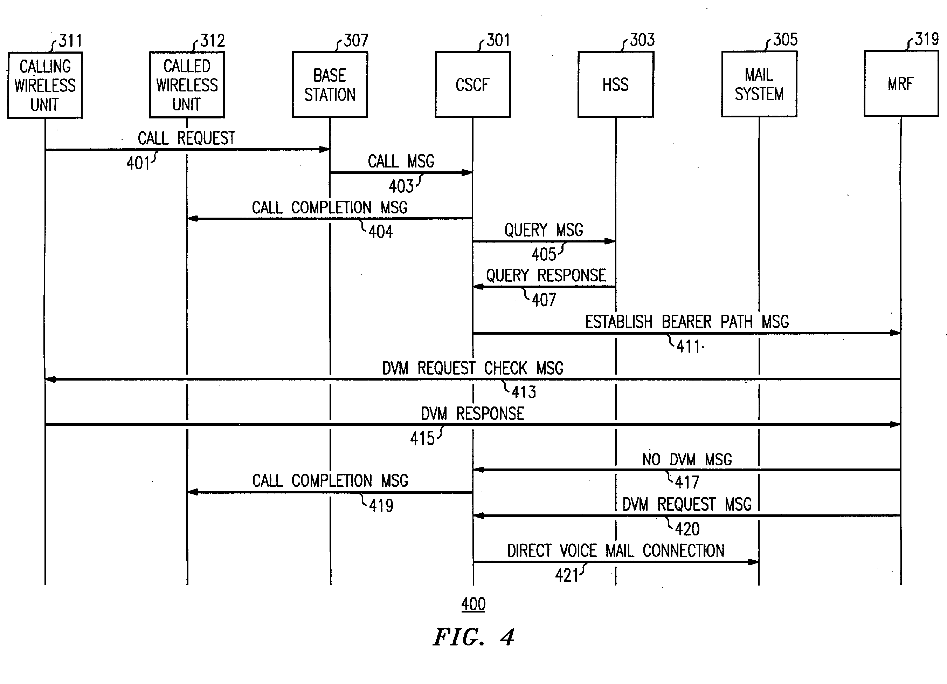

FIG. 4 depicts a ladder diagram 400 of a call flow in 3G system 300 in accordance with the preferred embodiment of the present invention.

A calling unit, such as wireless unit 311, sends a call request 401 to base station 307. Call request 401 is a request for a direct multimedia mail message, which is a message that is delivered directly to the multimedia mailbox of the called phone without ringing the called phone. Call request 401 preferably includes an indication of a direct multimedia mail request, such as *90, and the directory number of the call wireless unit.

Base station 307 forwards a call message 403 to CSCF 301. Call message 403 is based on call request 401. Call message 403 includes an indication of the direct multimedia mail request and the directory number of the call wireless unit.

If called wireless unit 312 has not subscribed to the direct multimedia mail service, CSCF 101 preferably sends call completion message 404 to called wireless unit 312. The call between calling wireless unit and called wireless unit 312 will then be processed in the typical manner. CSCF 101 obtains information relating to the location of called wireless unit 312 by sending a query message 405 to HSS 303. Query message 405 preferably includes the directory number of wireless unit 312.

HSS 303 determines the location of called wireless unit 312 by checking the directory number of called wireless unit 312 in a database. Upon determining the location of called wireless unit 312, HSS 303 sends a query response message 407 back to CSCF 101. Query response message 207 includes the last-known location of called wireless unit 312. CSCF 101 then locates called wireless unit 312 using the location information obtained from HSS 303. This is accomplished via a well-known paging process. Once called wireless unit 312 is located, the base station to which it is currently active is assigned to serve the call.

If called wireless unit 312 does not answer the call completion message, the calling wireless unit 311 may be directed to multimedia mail system 305 to leave a message for called wireless unit 312, may receive an out of service message, or may simply receive a series of rings indicating that called wireless unit 312 is not answering the call.

Alternately, if calling wireless unit 311 has dialed the access code and if called wireless unit has not subscribed to the direct multimedia mail service, MRF 319 can play an announcement to calling wireless unit 311. The announcement would ask calling wireless unit whether calling wireless unit 311 would like to ring called wireless unit 312 or end the call to called wireless unit 312.

However, if called wireless unit 312 has subscribed to the direct multimedia mail service and calling wireless unit 311 has requested a direct multimedia mail message, CSCF 101 will not send call completion message 404, query message 405, or query response 407, but will instead send establish bearer path message 411 to mail system 305.

MRF 319 sends DVM request check 413 to calling wireless unit 311. DVM request check 413 is sent to determine if the calling party desires to complete the connection to the multimedia mailbox associated with called wireless unit 312 without ringing called wireless unit 312. Calling wireless unit 311 responds with DVM response 415. If the calling wireless unit has not requested a direct multimedia mail connection, messages 417 and 419 will be sent. MRF 319 sends a no DVM message 417 to CSCF 301. CSCF 301 sends call completion message 419 to called wireless unit 312, and processing occurs in a similar manner as when call completion message 409 was sent above.

If calling wireless unit 311 did request a direct multimedia mail connection, MRF 319 sends DVM request message 420 to CSCF 301. CSCF 301 sends direct multimedia mail message 421 to multimedia mail system 305. Upon receiving direct multimedia mail message 421, multimedia mail system 305 connects calling wireless unit 311 to the multimedia mailbox associated with called wireless unit 312. This connection to the multimedia mailbox of called wireless unit 312 is done without alerting called wireless unit 312 that a call was incoming.

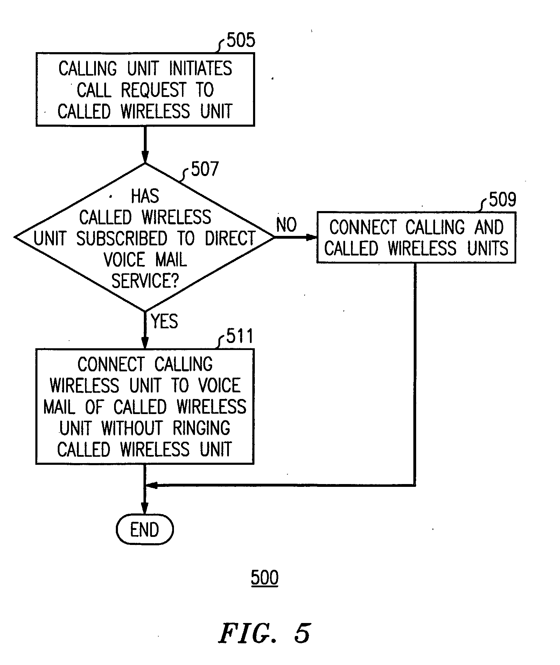

FIG. 5 is a flowchart 500 depicting an alternate embodiment of the present invention. In this embodiment, the calling unit does not request a direct multimedia mail message, but may be automatically directed to the multimedia mailbox of the called wireless unit based upon the decision of the called wireless unit.

The called wireless unit may subscribe for direct multimedia mail service. Direct multimedia mail service allows the subscriber to have users contact the multimedia mailbox associated with the subscriber without ringing the called wireless unit. The called wireless unit can activate and deactivate direct multimedia mail functionality as desired. When activated, any incoming calls intended for the called wireless unit will be sent directly to the multimedia mailbox associated with the called wireless unit without ringing the called wireless unit. The activation is preferably accomplished by pressing a predetermined key sequence on the keypad of the called wireless unit.

A calling unit, which can be a wireline unit or a wireless unit, initiates (505) a call request to a called wireless unit. The call request is sent to the call processing control entity, such as an MSC or a CSCF, associated with the called wireless unit.

The call processing control entity determines (507) if the called wireless unit has subscribed to and activated the direct multimedia mail service. This is preferably done by checking a database that is updated any time the called wireless unit registers for, activates, or deactivates the direct multimedia mail service. If the called wireless unit has not signed up for direct multimedia mail service or has deactivated the service, the call processing control entity connects (509) the calling unit with the called wireless unit, as is known in the art.

However, if the called wireless unit has subscribed to and activated direct multimedia mail service, the call processing control entity preferably connects (511) the calling party directly to the multimedia mail system of the called wireless unit without ringing the called wireless unit. This is accomplished in the same manner as described above. Alternately, a message can be played to the calling party giving the calling party a choice as to action. The calling party can be given the choice of connecting directly to the mailbox associated with the called party without ringing the called party, ringing the called party, or ending the call.

The alternate embodiment of the present invention can be accomplished in a 2G communication system, a 3G communication system, or any other communication system that includes a call processing control entity and a multimedia mail system.

Thus, the present invention provides a method and apparatus that solves a problem associated with the prior art. The present invention provides a method and apparatus for performing direct multimedia mail in a communication system. A calling party can directly send a message to a multimedia mailbox of a called party without ringing the called party. This is preferably accomplished by utilizing a predetermined key sequence prior to dialing the directory number of the called party.

The present invention provides a wireless unit to receive calls directly to the multimedia mailbox associated with the wireless unit without ringing the wireless unit. This allows callers to be able to leave a message for the wireless unit without disturbing the user of the wireless unit by ringing the wireless unit.

While this invention has been described in terms of certain examples thereof, it is not intended that it be limited to the above description, but rather only to the extent set forth in the claims that follow.

## Claims

1. A method for leaving a multimedia mail message in a wireless multimedia mailbox associated with a wireless phone without ringing the wireless phone, the method comprising:
receiving a call request at a call processing control entity, the call request being a request for direct access to the wireless multimedia mailbox associated with the wireless phone; and
directing the call request to the wireless multimedia mailbox without ringing the wireless phone.

2. A method for leaving a multimedia mail message in a wireless multimedia mailbox associated with a wireless phone without ringing the wireless phone in accordance with claim 1, the method further comprising the step of determining whether the wireless phone has subscribed to direct multimedia mail service.

3. A method for leaving a multimedia mail message in a wireless multimedia mailbox associated with a wireless phone without ringing the wireless phone in accordance with claim 2, the method further comprising the step of sending the call request to the wireless phone if the wireless phone has not subscribed to direct multimedia mail service.

4. A method for providing direction of calls to a multimedia mailbox of a wireless phone without ringing the wireless phone, the method comprising:
registering the wireless phone for direct multimedia mail service, the direct multimedia mail service allowing calls to go directly to the multimedia mailbox associated with the wireless phone;
receiving a direct multimedia mail request for the wireless phone, the direct multimedia mail request being a request to go directly to the multimedia mailbox of the wireless phone without first ringing the wireless phone; and
directing the call request to the multimedia mailbox associated with the wireless unit without ringing the wireless unit.

5. A communication system for providing direction of calls to a multimedia mailbox of a wireless phone without ringing the wireless phone, the communication system comprising:
a call processing control entity for registering the wireless phone for direct multimedia mail service, the direct multimedia mail service allowing calls to go directly to the multimedia mailbox associated with the wireless phone;
a subscriber database coupled to the call processing control entity for storing the registration for direct multimedia mail service of the wireless phone;
a multimedia mail system coupled to the call processing control entity; and
a base station coupled to the call processing control entity for receiving a direct multimedia mail request for the wireless phone, the direct multimedia mail request being a request to go directly to the multimedia mailbox of the wireless phone without first ringing the wireless phone.

6. A communication system for providing direction of calls to a multimedia mailbox of a wireless phone without ringing the wireless phone in accordance with claim 5, wherein the base station directs the direct multimedia mail request to call processing control entity, wherein the direct multimedia mail request comes from a calling party, and wherein the calling party is directed to the multimedia mailbox of the wireless phone without ringing the wireless phone.

7. A communication system for providing direction of calls to a multimedia mailbox of a wireless phone without ringing the wireless phone in accordance with claim 5, wherein the call processing control entity is a Mobile Switching Center (MSC).

8. A communication system for providing direction of calls to a multimedia mailbox of a wireless phone without ringing the wireless phone in accordance with claim 7, wherein the MSC includes a Service Circuit (SVC).

9. A communication system for providing direction of calls to a multimedia mailbox of a wireless phone without ringing the wireless phone in accordance with claim 5, wherein the call processing control entity is a Call Session Control Function (CSCF).

10. A call processing control entity for providing direction of calls to a multimedia mailbox of a wireless phone without ringing the wireless phone, the call processing control entity comprising:
a processor for registering a wireless phone for direct multimedia mail service, the direct multimedia mail service allowing calls to go directly to the multimedia mailbox associated with the wireless phone;
an input port for receiving a direct multimedia mail request for the wireless phone, the direct multimedia mail request being a request to go directly to the multimedia mailbox of the wireless phone without first ringing the wireless phone; and
an output port for directing the call request to the multimedia mailbox of the wireless unit without ringing the wireless unit.
